# EUROPÄISCHE PATENTSCHRIFT

(11) **EP 3 775 688 B1**
(45) Veröffentlichungstag und Bekanntmachung des Hinweises auf die Patenterteilung: **27.04.2022**
(21) Anmeldenummer: 19718263.7
(22) Anmeldetag: 04.04.2019
(51) Int. Cl.: F23H 7/06, F23H 7/18, C10J 3/40, C10J 3/26

(54) **FESTBETTVERGASER ZUM ERZEUGEN EINES PRODUKTGASES AUS SCHÜTTBAREN BIOMASSETEILCHEN**
FIXED-BED GASIFIER FOR GENERATING A PRODUCT GAS FROM POURABLE BIOMASS PARTICLES
GAZÉIFICATEUR À LIT FIXE SERVANT À PRODUIRE UN GAZ À PARTIR DE PARTICULES DE BIOMASSE EN VRAC

(30) Priorität: 05.04.2018 DE 102018205115
(43) Veröffentlichungstag der Anmeldung: 17.02.2021
(73) Patentinhaber: Rosmarin Holdings Limited, Ramsey IM8 2LQ (IM)
(72) Erfinder: DRESSLER, Horst, 92360 Mühlhausen (DE)
(74) Vertreter: ERNICKE Patent- und Rechtsanwälte PartmbB
(86) Internationale Anmeldenummer: PCT/EP2019/058514
(87) Internationale Veröffentlichungsnummer: WO 2019/193098

(56) Entgegenhaltungen:
- DE-C- 324 929
- DE-C- 420 513
- DE-C- 428 648

## Beschreibung

Die vorliegende Offenbarung betrifft einen Gleichstrom-Festbettvergaser zum Erzeugen eines Produktgases aus schüttbaren Biomasseteilchen, insbesondere faserhaltiger oder Schlacke bildender Stoffe. Der Festbettvergaser hat eine Ausbildung nach dem Oberbegriff des eigenständigen Sachanspruchs. Der Festbettvergaser ist insbesondere dazu vorgesehen und ausgebildet, ein Produktgas für ein Blockheizkraftwerk bereit zu stellen.

Die Offenbarung betrifft weiterhin ein Verfahren zum Betrieb des Festbettvergasers und zur Bereitstellung eines Produktgases aus schüttbaren Biomasseteilchen.

Holzbrennstoffe werden teurer und sind nicht in allen Gebieten der Erde ausreichend verfügbar. Dahingegen stehen viele faserige und halmhaltige Stoffe, auch als Abfallstoffe, z. B. als Ernteabfälle, in ausreichendem Maße zur Verfügung. In großen Anlagen werden diese Stoffe, auch in Vergasungsanlagen, zur Erzeugung von Strom und Wärme genutzt. Die dabei teils in größeren Mengen anfallende Schlacke wird bei hohen Temperaturen flüssig abgeführt. Für kleine dezentrale Blockheizkraftwerke (BHKW) ist dies jedoch nicht wirtschaftlich.

Beispiele für faserige und halmhaltige Stoffe sind so genannte "Empty Fruit Bunches" (EFB), die in großen Mengen bei der Palmölproduktion anfallen, sowie Gräser wie Napiergras oder Miscanthus, die u. a. als Energiepflanzen angebaut werden.

Die bisher bekannten Festbettvergaser sind nicht optimal ausgebildet.

Eine Übersicht zum Thema Festbettvergasung von Biomasseteilchen ist aus dem Vortrag "Festbett-Vergasung - Stand der Technik (Überblick)" von Lettner, Haselbacher und Timmerer auf der Tagung " Thermo-chemische Biomasse-Vergasung für eine effiziente Strom/Kraftstoffbereitstellung - Erkenntnisstand 2007" im Februar 2007 in Leipzig (http://www.holzgasjournal.de/download/2_Stufen _vergaser_ 1.pdf) bekannt. In dieser Übersicht ist ein Gleichstromschachtvergaser erläutert, bei dem die Biomasseteilchen von oben mit der Schwerkraft dem Vergaserbehälter zugeführt werden. In einem solchen Festbettvergaser bildet sich von oben nach unten die Trocknungs-, Pyrolyse-, Oxidations- und Reduktionszone aus, die Reduktionszone befindet sich unmittelbar über dem Rost. Der Produktgasabzug erfolgt aus dem Bereich des Vergaserbehälters unter dem Rost, in dem sich auch die durch den Rost fallende kleinteilige Asche ansammelt. Ein Gleichstromvergaser ist auch in der WO2016091835A1 erläutert.

DE 324 929 C, DE 420 513 C und DE 428 648 C offenbaren geneigte Rostvorrichtungen.

DE 377 222 A offenbart einen Treppenrost mit bewegten Schürrosten, der eine Einrichtung zur Verheizung von Brennstoffen weiterbildet. In der Heizeinrichtung wird eine brennende Masse, d.h. das Glutbett, ständig durch einen Treppenrost umgewälzt. Der Treppenrost weist mehrere separat bewegbare und in Stufen angeordneten Schürroste auf. Die Schürroste sind jeweils horizontal ausgerichtet und in der Horizontalrichtung bewegbar. Die Heizeinrichtung umfasst eine Vergasungskammer und eine schräg daneben liegende Nebenkammer, die durch eine Staumauer separiert sind. Die Staumauer ragt in den Brennstoff hinein. Unter der Staumauer wird durch den Treppenrost Brennmaterial zugefördert. In der Nebenkammer findet eine vollkommene Verbrennung des Brennstoffrestes bei starkem Luftüberschuss statt. Der Spalt zwischen der Staumauer und dem Treppenrost ist so gering bemessen, dass nur eine dünne Brennstoffschicht hindurchkommen kann. Oberhalb des Treppenrostes ist eine Beschickungseinrichtung mit einem separaten Rost angeordnet. In der Nebenkammer ist oberhalb des Stufenrostes eine Öffnung zu einer Gasleitung angeordnet. Die in der Nebenkammer entstehenden Gase werden durch die Gasleitung zu einem Raum geleitet, der unter dem separaten Rost der Beschickungseinrichtung liegt.

DE 43 44 569 A offenbart einen Gegenstrom und Querstrom-Vergaser mit einem ähnlichen Rost, der als Stufenrost und Schubrost ausgebildet ist. Ein Brenngasabzug erfolgt über der oberen Stufe des Rostes.

Aus DE 567 376 A ist eine Aschenaustragvorrichtung für einen Gaserzeuger bekannt, die einen in der Mitte knickfähigen beweglichen Schrägrost umfasst. Das untere Ende des Schrägrosts ist mit Abstand zu allen Wandungen des Gaserzeugers angeordnet. Unterhalb des Rostes befindet sich ein Wasserbecken zur Aufnahme von Schlacke und Brennasche.

DE 324 929 A zeigt zwei einander gegenüber liegende und schräg ausgerichtete Roste für einen Gaserzeuger, die entlang der Rostfläche bewegbar sind. Das Gehäuse des Gaserzeugers unterhalb der Roste ist geschlossen.

Aus US 5 226 927 ist ein Gegenstrom-Vergaser mit einem zylindrischen Aufbau bekannt.

Es ist Aufgabe der vorliegenden Erfindung, einen verbesserten Gleichstrom-Festbettvergaser aufzuzeigen. Die Erfindung löst diese Aufgabe durch die kennzeichnenden Merkmale der eigenständigen Ansprüche.

Der Festbettvergaser gemäß der vorliegenden Offenbarung weist einen Vergaserbehälter, eine Zuführung für Biomasseteilchen im oberen Bereich des Vergaserbehälters, einen Rost zur Abstützung der Biomasseteilchen in dem Vergaserbehälter, eine Luftzuführung zur Zuführung von Verbrennungsluft in den Vergaserbehälter sowie einen aus dem Bereich unter dem Rost aus dem Vergaserbehälter herausführenden Produktgasabzug auf. Es handelt sich somit um einen Gleichstrom-Festbettvergaser.

Der Rost ist über eine Rostantriebseinrichtung bewegbar. Er ist im Wesentlichen plan und schräg in dem Vergaserbehälter angeordnet und bildet so eine schiefe Ebene, auf der sich die Biomasseteilchen abstützen. Die schiefe Ebene teilt den Vergaserbehälter in einen Bereich über dem Rost und einen Bereich unter dem Rost. Mittels der Rostantriebseinrichtung ist der Rost in einer Richtung quer zur schiefen Ebene hin und her bewegbar. Der bewegte Rost drückt so einfallende Schlackeklumpen wiederholt gegen die dem Rost gegenüberliegende Seitenwand, um sie aufzubrechen.

Der bewegliche Rost wirkt bevorzugt zusammen mit der ihm gegenüberliegenden Seitenwand des Vergaserbehälters als eine Art Backenbrecher, wie er aus der Bauindustrie zum Zerkleinern von Abbruchmaterial bekannt ist. Genügend zerkleinert fallen die Schlackebrocken durch die Spalten des Rostes oder den Spalt am unteren Ende des Rostes zwischen Rost und Seitenwand. Aus dem Bereich unterhalb des Rostes werden Asche und zerkleinerte Schlackenbrocken aus dem Vergaserbehälter abgeführt.

Der Festbettvergaser gemäß der vorliegenden Offenbarung ermöglicht die Nutzung der oben genannten faserigen und halmhaltigen Stoffe und anderer Schlacke bildender Brennstoffe auch in kleinen Anlagen, wie beispielsweise Blockheizkraftwerken. Schlackebrocken werden hierbei durch den hin und her beweglichen Rost aufgebrochen. Festbettvergaser zur Erzeugung eines brennbaren Produktgases aus schüttbaren Biomasseteilchen zeichnen sich durch einen vergleichsweise einfachen Aufbau aus. Man unterscheidet Gegenstrom- und Gleichstromvergaser. Beim Gegenstromvergaser ist die Strömungsrichtung der Verbrennungsluft und des Produktgases zu der Zuführrichtung der Biomasseteilchen entgegengesetzt und beim Gleichstromvergaser, wie hier offenbart, stimmt die Zuführrichtung der Biomasseteilchen mit der Strömungsrichtung von Verbrennungsluft und Produktgas überein. In Festbettvergasern werden verschiedene Reaktionszonen, nämlich Trocknungs-, Pyrolyse-, Oxidations- und Reduktionszone unterschieden, in denen verschiedene thermochemische Reaktionen ablaufen.

Faserige und halmhaltige organische Stoffe haben oft den Nachteil, dass bei deren Vergasung eine große Menge Schlacke entsteht, z. B. durch niedrigschmelzende Aschekomponenten. Die Schlacke bildet Klumpen, die den Vergasungsprozess beeinträchtigen, den Produktgasabzug behindern, zu Brückenbildung beitragen und das Nachrutschen der Biomasseteilchen verzögern oder verhindern können. Brückenbildung kann besonders durch Verhaken oder Verklumpen Schlacke bildender oder faseriger Biomasseteilchen entstehen, sodass das Schüttgut verzögert nachrutscht und Hohlräume entstehen. Die vorgenannten parasitären Effekte können dazu führen, dass ein Produktgas mit einer stark schwankenden Qualität erzeugt wird, was Nachteile in der Verwendung des Produktgases erzeugt.

Eine besondere Aufgabe der vorliegenden Erfindung ist es also, einen Festbettvergaser anzugeben, der auch für zur Schlackebildung neigende Biomasse geeignet ist.

Durch den Festbettvergaser gemäß der vorliegenden Offenbarung werden die oben genannten parasitären Effekte stark vermindert oder beseitigt, sodass ein kontinuierlich ablaufender chemischer Prozess bei stabilen Reaktionszonen im Vergasungsbehälter und somit eine gleichbleibende Produktgasqualität erreichbar ist.

Der Rost des Festbettvergasers gemäß der vorliegenden Offenbarung wird bevorzugt intervallartig bewegt. Der Anteil der Bewegungsphasen macht bevorzugt einen geringen Teil der Betriebsdauer aus. In welchem Umfang eine Bewegung erforderlich und für die Bereitstellung eines kontinuierlichen Prozesses förderlich ist, kann von verschiedenen Parametern abhängen, insbesondere von der Art der Biomasseteilchen. Bei Einsatzstoffen, die stark zur Bildung von Schlacke neigen, können höhere Bewegungsphasen Zeitanteile an der Betriebsdauer vorliegen, als bei Einsatzstoffen, die wenig zur Bildung von Schlacke neigen. Bei der Verbrennung von Miscanthuspellets haben sich beispielsweise mittlere Bewegungsphasendauern von etwa 10s gegenüber Pausendauern von 120s als günstig erwiesen (Bewegungsphasen Zeitanteil an Betriebsdauer ca. 7-8 %). Je nach Ausmaß der Schlacke Bildungsneigung sind auch niedrigere oder höhere Bewegungsphasen Zeitanteile möglich, insbesondere bevorzugt weniger als 35% der Betriebsdauer, weiter bevorzugt weniger als 10% der Betriebsdauer. In Einzelfällen könnte auch ein Bewegungsphasen Zeitanteil von bis zu 50% der Betriebsdauer vorgesehen werden.

Durch die Bewegung des Rostes werden Brückenbindungen aufgebrochen, aber es erfolgt keine Umwälzung des Glutbetts. So wird sichergestellt, dass die verschiedenen Reaktionszonen als benachbarte Höhenlagen über dem Rost erhalten bleiben. Durch die Bewegung des Rostes wird bevorzugt lediglich das Nachrutschen der Biomasseteilchen gefördert. Das Nachrutschen findet durch Gravitation statt. Ein Nachrutschen findet auch während der Pausephasen statt und gehört zum normalen Wirkprinzip eines Festbettvergasers. Die Rostbewegungen ändern also nichts an diesem Wirkprinzip. Vielmehr führen die Rostbewegungen dazu, dass in Makrobetrachtung eine deutlich höhere Kontinuität des Nachrutschens erreicht wird.

Der Festbettvergaser gemäß der vorliegenden Offenbarung weist bevorzugt einen Rost auf, der rechteckig geformt ist und eine Längsseite und eine Breitseite aufweist. Der Vergaserbehälter weist bevorzugt zumindest im Bereich des schräg angeordneten Rostes in horizontaler Richtung einen rechteckigen Querschnitt, eine vordere, eine hintere, eine linke und eine rechte Seitenwand auf. Die vordere und die hintere Seitenwand können weiterhin einen ersten Wandabstand und die linke und rechte Seitenwand einen zweiten Wandabstand aufweisen, wobei die Längsseite des Rostes horizontal verläuft und parallel zur vorderen Seitenwand des Vergaserbehälters angeordnet ist.

Nach dieser bevorzugten Ausgestaltung mit einem Vergaserbehälter mit rechteckigem Querschnitt und einem rechteckigen Rost vereinfacht sich die Konstruktion des beweglichen Rostes. Ein rechteckiger Rost ist einfacher im Aufbau als ein runder Rost. Da der schräge Rost die Biomasse abstützen soll, bedingt der rechteckige Rost auch einen Vergaserbehälter mit rechteckigem Querschnitt. Durch die Rechteckform von Vergaserbehälter und Rost lassen sich definierte Abstände zwischen schrägem Rost und gegenüberliegender Wand einstellen. Darüber hinaus lassen sich durch Veränderung der Wandabstände des Vergaserbehälters, der Neigung des Rostes und der Ausmaße des Rostes auf einfache Weise definierte Verhältnisse in der Oxidations- und Reduktionszone einstellen.

Eine weitere bevorzugte Ausführung sieht vor, dass die Neigung des Rostes zur Senkrechten zwischen 23° und 28° (Winkelgrad) beträgt. Dieser Neigungsbereich des Rostes hat in der Praxis zu stabilen Verhältnissen in der Oxidations- und Reduktionszone des Festbettvergasers geführt. Außerdem hat sich dieser Neigungsbereich als günstig beim Drücken und Zerkleinern der Schlackebrocken erwiesen.

Die oben genannten Neigungswinkel des Rostes ergeben zusammen mit einem Wandabstand von vorderer Seitenwand und hinterer Seitenwand im Bereich zwischen 100 und 130 mm eine optimale Lage von Oxidations- und Reduktionszone bezüglich des Rostes.

Die Abmaße des Rostes haben ferner einen Einfluss auf die Leistung des Festbettvergasers. Die schräg verlaufenden Abmaße des Rostes und der zugehörige (erste) Abstand der Wände des Vergaserbehälters, zwischen denen die schrägen Kanten angeordnet sind, bleiben bevorzugt konstant, damit die als besonders vorteilhaft ermittelte Geometrie der Reaktionszonen über dem Rost erhalten bleibt. Durch die Wahl der Breite der in horizontaler Richtung verlaufenden Kanten des Rostes und die Einstellung des zugehörigen (zweiten) Abstands der Wände des Vergaserbehälters, zwischen denen diese horizontalen Kanten angeordnet sind, kann die Leistung des Festbettvergasers vorgegeben oder eingestellt werden. Es lassen sich also unterschiedliche Leistungsklassen oder momentane Leistungsstufen durch einen konstanten ersten Wandabstand und einen die Leistung variierenden zweiten Wandabstand erzielen. Der vertikale Aufbau der verschieden Zonen des Festbettvergasers und insbesondere die Lage von Oxidations- und Reduktionszone bleiben für die verschiedenen Leistungsstufen oder Leistungsklassen gleich und durch Vergrößerung des zweiten Wandabstands - der Breite des Festbettvergasers - wird die Leistung des Festbettvergasers gesteigert.

Eine weitere bevorzugte Variante des Festbettvergasers sieht vor, dass der Rost eine Mehrzahl von Roststäben umfasst. Die Roststäbe können im Wesentlichen parallel zu der schräg verlaufenden Kante ausgerichtet sein, was die bevorzugte Variante darstellt, weil hierdurch ein Nachrutschen der Biomasseteilchen begünstigt wird. Die Roststäbe können ein oberes und ein unteres Ende aufweisen. Alternativ können die Roststäbe im Wesentlichen horizontal ausgerichtet sein und seitliche Enden haben. Ferner sind beliebige andere Formen des Rostes möglich.

Die Roststäbe sind also bevorzugt schräg im Vergaserbehälter angeordnet.

Weiterhin sind die Roststäbe bevorzugt mit einem Abstand zueinander im Vergaserbehälter angeordnet. Der Abstand ist so gewählt, dass die Schlackeklumpen ab einem gewissen Grad der Zerkleinerung durch den Rost fallen können, während andererseits der Abstand klein genug ist, um eine Abstützung der Biomasseteilchen zu gewährleisten.

Nach einer weiteren bevorzugten Ausgestaltung umfasst der Rost eine Mehrzahl von Roststäben, die schräg im Vergaserbehälter angeordnet sind und gegeneinander bewegbar sind. Das heißt, es können der Rost als Ganzes und/oder die einzelnen Roststäbe innerhalb des Rostes in Bewegung versetzt werden. Durch die Bewegung zwischen den Roststäben kann verhindert werden, dass Brocken zwischen den Roststäben einklemmen und den Rost verstopfen, oder dass sich Schlacke oder sonstige Partikel an dem Rost festsetzen. Andererseits wird das Abgleiten der Biomasseteilchen auf dem schrägen Rost unterstützt.

Die Rostantriebseinrichtung kann beliebig ausgebildet sein. Es kann eine gemeinsame Rostantriebseinrichtung für die Bewegung des Rosts und die Bewegung der Roststäbe vorgesehen sein. Alternativ können einerseits eine Rostantriebseinrichtung für den Rost und andererseits eine separate Antriebseinrichtung für die Roststäbe vorgesehen sein. Eine gemeinsame Rostantriebseinrichtung kann steuerbar oder schaltbar ausgebildet sein, um selektiv eine Bewegung des Rosts und/oder eine Bewegung der Roststäbe zu bewirken.

Eine bevorzugte Ausführungsformen der Rostantriebseinrichtung mit einer Kurbelwelle ist weiter unten angegeben. Sie ermöglicht auf einfache Weise den gleichzeitigen Antrieb der Mehrzahl von Roststäben. Die Roststäbe umfassen beispielsweise sich quer von den Roststäben weg erstreckende obere Lagerfortsätze. Diese Lagerfortsätze können direkt oder indirekt mit der Kurbelwelle verbunden sein. Sie können insbesondere drehbar auf Exzenterelementen der Kurbelwelle gelagert sein. Aus der Bewegung der Roststäbe ergibt sich hier auch eine Bewegung des Rosts insgesamt und insbesondere der unteren im Wesentlichen horizontalen Kantenbereiche des Rosts.

Der Rost kann insbesondere Lagerleisten mit einem vorderen und einem hinteren Ende umfassen, wobei die unteren Lagerfortsätze drehbar an den vorderen Enden der Lagerleisten gelagert sind und die hinteren Enden der Lagerleisten kippbeweglich sind.

Die Roststäbe sind bevorzugt auf der nach oben weisenden Seite abgeflacht, d.h. auf der Seite, auf der die Biomasseteilchen abgestützt sind. Hierdurch wird das Nachrutschen der Biomasseteilchen auf der planen und schiefen Ebene unterstützt, die durch den Rost gebildet ist.

Die Ausbildung der Rostantriebseinrichtung ist bevorzugt so gewählt, dass die maximale Lagedifferenz zwischen zwei benachbarten Roststäben geringer ist als die Dicke eines Roststabs. Die Exzenterelemente können eine hierfür geeignete Amplitudenhöhe aufweisen. So wird verhindert, das Biomasseteilchen durch einen zu stark erweiterten Spalt zwischen zwei Roststäben fallen. Ein Roststab kann beispielsweise einen quadratischen Querschnitt mit einer Seitenlänge von ca. 20mm bis 35mm haben. Um Brückenbindungen aufzubrechen und das Nachrutschen zu unterstützen, kann es ausreichend sein, eine maximale Lagedifferenz von 7mm bis 15mm vorzusehen. Alternativ können andere Querschnittsformen der Roststäbe vorgesehen sein, bspw. ein Rechteck-Querschnitt, ein TrapezQuerschnitt oder ein Halbkreis-Querschnitt.

Gemäß einer weiteren vorteilhaften Ausbildung kann ein Gabelelement vorgesehen sein, das in den Vergaser hineinragt und bevorzugt von oben in das Glutbett bis zum Rost schiebbar ist. Alternativ kann das Gabelelement auf andere Weise an oder im Vergaserbehälter angeordnet und in das Glutbett schiebbar sein. Durch das Einschieben des Gabelelementes in das Gluttbett ist vorteilhafter Weise erreichbar, dass Brückenbildung in der Oxidationszone, die besonders bei stark schlackenden Biobrennstoffen auftritt, stark vermindert oder vermieden wird bzw. dass durch die Gabel solche Brücken aufgebrochen werden. Ein solches Gabelelement kann bevorzugt zwei oder mehr Zinken, d.h. eine Mehrzahl von Zinken aufweisen. Es kann weiter bevorzugt unterschiedlich lange Zinken aufweisen. Die Zinken können an die Keilform des Bereichs über dem Rost angepasst sein.

Der Vergaserbehälter kann Seitenwände aufweisen, die nach unten leicht konisch bzw. in der Form eines Pyramidenstumpfes verlaufen. Mit anderen Worten weisen die Seitenwände des Vergaserbehälters bevorzugt einen Neigungswinkel gegenüber der Vertikalen auf, der eine Verjüngung oder Weitung bewirkt. Bevorzugt ist eine Weitung, weil hierdurch das Nachrutschen unterstützt wird. Das heißt, die konisch verlaufenden Seitenwände vermeiden das Verkeilen von Schlackebrocken auf dem Weg zum Rost. Die leicht konisch verlaufenden, sich nach unten verbreiternden Seitenwände des Vergaserbehälters können bevorzugt in einem Winkel von etwa 2° zur Vertikalen angeordnet sein.

Unter dem Rost kann eine rohrförmige Schlackenaufnahme angeordnet sein, die einen beliebigen Aufbau hat. Eine bevorzugte Variante sieht vor, dass die rohrförmige Schlackenaufnahme den Vergaserbehälter durchsetzt und in eine Schlackenaustragseinrichtung mündet. Die rohrförmige Schlackenaufnahme sorgt bevorzugt für einen kontinuierlichen Abtransport der Schlacke. Vorzugsweise weist die Schlackenaustragseinrichtung eine Förderschnecke auf.

Die Schlackenaustragungsvorrichtung und der Produktgasabzug können in einem Bauteil zusammengefasst sein. Durch diese vorteilhaften Ausgestaltung vereinfacht sich die Konstruktion.

Besonders in der Oxidationszone treten hohe Temperaturen der Gase auf, die häufig zwischen 800°C und 1000°C betragen. Der Rost kann eine Wasserkühlung aufweisen, so dass der Rost besser vor einer Erhitzung durch die heißen Gase und einen dadurch bedingten vorzeitigen Verschleiß geschützt wird. Die Wasserkühlung kann beliebig ausgebildet sein. Sie kann mit Kühlwasser oder einem anderen geeigneten und bevorzugt flüssigen Kühlmittel betrieben werden. Gemäß einer bevorzugten Variante ist die Antriebs- und Kurbelwelle rohrförmig ausgebildet. Sie kann damit eine Kühlmittelpassage bilden bzw. in dem Vergaserbehälter als Kühlelement wirken.

An einer Seitenwand des Vergaserbehälters, insbesondere an der hinteren Seitenwand, kann eine Klappe montiert sein, mittels der der Querschnitt des Vergaserbehälters über dem Rost (10) veränderbar ist. Die hintere Seitenwand, ist diejenige Seitenwand, neben der die obere horizontale Kante des Rosts angeordnet ist. Durch die Veränderung des Querschnitts des Vergaserbauteils kann während des Betriebs des Vergasers auf unterschiedliche Eigenschaften von unterschiedlichen Biomasseteilchen reagiert werden.

Der Betrieb des Festbettvergasers kann auf beliebige Weise gestartet oder beendet werden. Die Entzündung der Biomasseteilchen kann auf beliebige Weise innerhalb oder außerhalb des Festbettvergasers erfolgen. Beispielsweise kann beim Anfahren ein Zündmittel zugeführt werden, bevor oder während die Biomasseteilchenschüttung auf dem Rost aufgebracht wird. Das Zündmittel kann beispielsweise glühende Kohle oder ein anderer vorgezündeter Stoff sein.

Gemäß einer anderen Variante umfasst der Festbettvergaser eine Zündvorrichtung, die eine beliebige Ausbildung haben kann. Die Zündvorrichtung kann separat angeordnet sein. Alternativ kann die Zündvorrichtung in den Rost oder eine Seitenwand des Vergaserbehälters integriert sein.

Wiederum alternativ kann ein Entzünden der Biomasseteilchen durch Einbringen eines aufgeheizten Verbrennungsgases, insbesondere einer aufgeheizten Luft über die Luftzufuhr erfolgen.

In den Unteransprüchen sind weitere vorteilhafte Ausgestaltungen der Erfindung angegeben.

Weitere Vorteile und Merkmale der vorliegenden Erfindung werden ersichtlich aus der nachfolgenden Beschreibung mit Bezug auf die beigefügten Zeichnungen. Es zeigt:
- Figur 1:: eine schematische Darstellung eines Festbettvergasers in einer Seitenansicht gemäß einer beispielhaften Ausführungsform der vorliegenden Offenbarung;
- Figur 2:: eine schematische Darstellung eines Festbettvergasers gemäß der beispielhaften Ausführungsform der vorliegenden Offenbarung in einer Vorderansicht;
- Figur 3A:: eine schematische Darstellung des Festbettvergasers im Querschnitt entlang der Ebene B-B gemäß der beispielhaften Ausführungsform der vorliegenden Offenbarung;
- Figur 3B:: eine schematische Darstellung des Festbettvergasers im Querschnitt entlang der Ebene B-B gemäß einer weiteren beispielhaften Ausführungsform der vorliegenden Offenbarung;
- Figur 4:: den Rost in einem Querschnitt gemäß der Ausführungsform der vorliegenden Offenbarung nach Fig. 1 und 2;
- Figur 5:: den Rost gemäß der Ausführungsform nach Fig. 1 und 2 in einer vergrößerten Vorderansicht; und
- Figur 6:: eine schematische Darstellung der Reaktionszonen des Festbettvergasers gemäß der Ausführungsform nach Fig. 1 und 2.

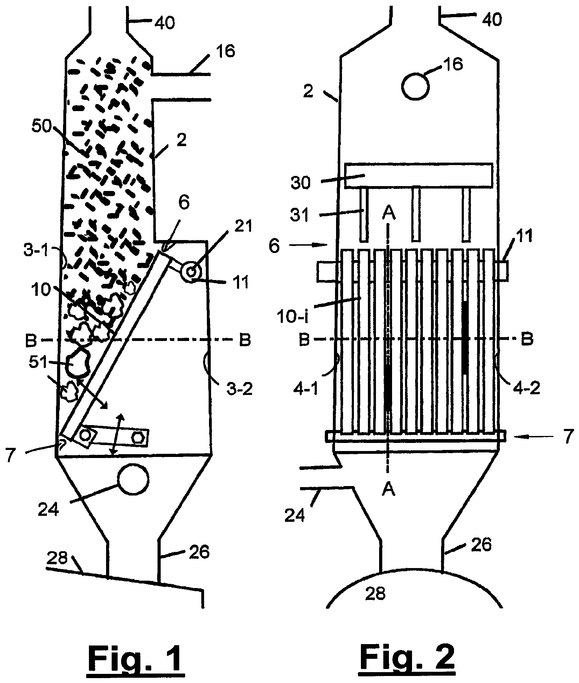

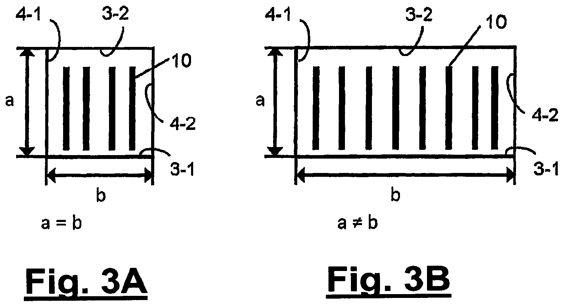

Fig. 1 und Fig. 2 zeigen eine beispielhafte Ausführungsform eines Festbettvergasers gemäß der vorliegenden Offenbarung. Wie in Fig. 1 und 2 dargestellt, weist der Festbettvergaser einen Vergaserbehälter 2 mit einem bevorzugt rechteckigen Querschnitt auf. Der Vergaserbehälter 2, der in Fig. 3A als Schnitt durch die Ebene B - B gezeigt ist, umfasst eine vordere Seitenwand 3-1, eine hintere Seitenwand 3-2, eine linke Seitenwand 4-1 und eine rechte Seitenwand 4-2.

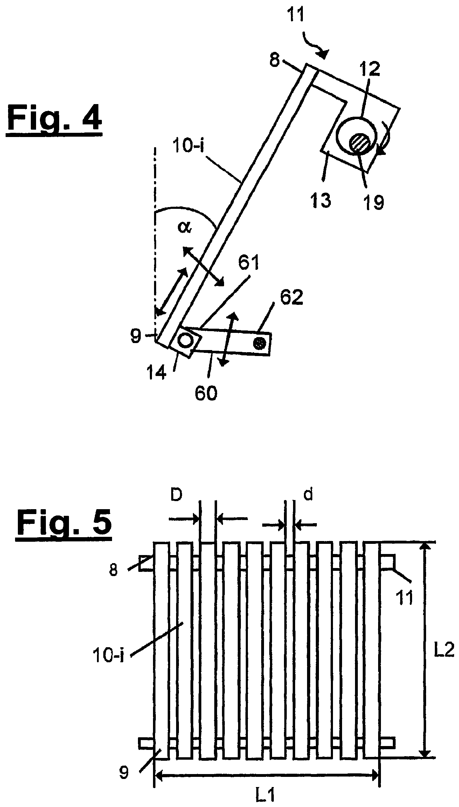

In dem bevorzugt rechteckigen Vergaserbehälter ist ein Rost 10 zur Abstützung von Biomasseteilchen 50 und sich bildenden Schlackebrocken 51 angeordnet. Der rechteckige Rost 10 weist eine obere Kante 6 und eine untere Kante 7 auf, die horizontal ausgerichtet sind. Die beiden Kanten 6, 7 sind parallel zu der vorderen Seitenwand 3-1 ausgerichtet. Der Rost 10 ist schräg in dem Vergaserbehälter angeordnet und bildet eine schiefe Ebene mit einer Neigung a zwischen 23° und 28° zur Senkrechten. Mittels einer Rostantriebseinrichtung 11 kann der Rost 10, wie durch die Pfeile angedeutet, quer und parallel zur schiefen Ebene bewegt werden. Die Rostantriebseinrichtung 11 ist im Bereich der oberen Kante 6 des Rostes 10 angeordnet und wird in Fig. 4 detaillierter beschrieben. Der rechteckige Rost 10 ist so dimensioniert, dass sich die Biomasseteilchen 50 auf dem Rost 10 abstützen, d. h. die Abstände (Spaltmaße) des Rostes 10 zu den Seitenwänden 3-1, 3-2, 4-1, 4-2 sind klein genug gewählt.

Die vordere Seitenwand 3-1 ist benachbart zu der unteren Kante 7 des Rosts 10 angeordnet. Die hintere Seitenwand 3-2 ist benachbart zu der oberen Kante 6 des Rosts 10 angeordnet. Die Spaltmaße zwischen der oberen Kante 6 und der hinteren Seitenwand 3-2 bzw. zwischen der untern Kante 7 und der vorderen Seitenwand 3-1 sind durch die Bewegung des Rosts 10 veränderlich. Insbesondere die untere Kante 7 wird infolge der Bewegung des Rosts 10, die quer zur schiefen Ebene erfolgt bzw. senkrecht zu im Wesentlichen planen Oberfläche des Rostes 10 erfolgt, zyklisch an die vordere Seitenwand 3-1 angenähert und wieder entfernt, sodass sich der Spalt zwischen der Kante 7 und der vorderen Seitenwand 3-1 zyklisch vergrößert und verkleinert.

Im oberen Bereich des Vergaserbehälters 2 ist eine Zuführung 40 für Biomasseteilchen 50 angeordnet. Das Zuführen der Biomasseteilchen kann auf beliebige Weise erfolgen. Bevorzugt ist an der Zuführung 40 eine Schleuse (nicht dargestellt) angeordnet, durch die ein unkontrolliertes Eindringen oder Entweichen von Gas bzw. Luft verhindert wird.

Ebenfalls in den oberen Bereich des Vergaserbehälters 2 mündet eine Luftzuführung 16 zur Zuführung von Verbrennungsluft in den Vergaser. Die Verbrennungsluft wird bevorzugt in einer kontrollierten Weise zugeführt, insbesondere unter Steuerung oder Regelung des Volumenstroms.

Aus dem Bereich unter dem Rost 10 führt ein Produktgasabzug 24 heraus. Mit anderen Worten ist in dem Vergaserbehälter 2 unterhalb des Rosts 10 eine Mündung zu einem Produktgasabzug 24 angeordnet.

Unterhalb des Produktgasabzugs 24 ist gemäß dem dargestellten Beispiel eine rohrförmige Schlackenaufnahme 26 angeordnet, die in eine Schlackenaustragseinrichtung 28 mündet. Alternativ kann eine beliebige andere Form der Schlackenaufnahme vorgesehen sein. Die Schlackenaustragseinrichtung 28 kann zum Abtransport der Schlacke eine Förderschnecke aufweisen (nicht eingezeichnet). Sie kann ebenfalls beliebig ausgebildet sein. Bevorzugt ist die oben erwähnte Zusammenfassung von Schlackenaustragseinrichtung 28 und Produktgasabzug 24 in einem Bauteil.

Wie aus Fig. 2 zu ersehen ist, ist oberhalb des Rosts 10 ein bevorzugt von oben in den Vergaserbehälter 2 hineinragendes Gabelelement 30 angeordnet. Das Gabelelement 30 alternativ eine andere Anordnung haben. Es ist in Fig. 1 zur besseren Übersichtlichkeit nicht dargestellt.

Bevorzugt ist das Gabelelement 30 von oben in das Glutbett bis zum Rost 10 schiebbar. Hierfür kann ein separater Gabelantrieb vorgesehen sein. Alternativ kann eine Bewegung des Gabelelementes 30 durch die Rostantriebsvorrichtung 11 ausgelöst oder von der Bewegung des Rosts 10 abgeleitet sein.

Das Gabelelement 30 kann eine Mehrzahl von Zinken 31 aufweisen. Die Zinken 31 können eine beliebige Form und Anzahl haben. Sie können gleiche oder unterschiedliche Länge aufweisen . Ferner können sie mit gleicher oder mit unterschiedlicher Länge beispielsweise an die Neigung a des Rosts 10 angepasst sein.

Mit dem Gabelelement 30 können Brücken, die in der Brennstoffschüttung 50 beispielsweise durch Verhaken oder Verklumpen faseriger oder Schlacke bildender Biomasseteilchen 50 entstehen können, aufgebrochen werden. Dadurch wird ein kontinuierliches, gleichmäßiges Nachrutschen der Biomasseteilchen 50 erreicht. Folglich wird die Ausbildung von stabilen Reaktionszonen, insbesondere einer stabilen Oxidationszone OZ und einer stabilen Reduktionszone RZ oberhalb des Rostes 10 unterstützt, was der Bereitstellung eines Produktgases mit einer konstanten Zusammensetzung und Qualität zuträglich ist.

Fig. 4 und Fig. 5 zeigen vergrößerte Ansichten des Rosts 10 nach Fig. 1 und 2. Wie aus Fig. 2 und 5 zu ersehen ist, weist der Rost 10 gemäß einer bevorzugten Variante eine Mehrzahl von Roststäben 10-i auf. Die Roststäbe 10-i können schräg mit einem Abstand d zueinander im Vergaserbehälter 2 angeordnet sein, so dass sich Rostspalte ergeben, durch die Asche und kleinere Schlackebrocken 51 hindurchtreten können. Die Abstände d zwischen den Roststäben 10-i können dabei einheitlich oder unterschiedlich gewählt sein. Ferner ist es möglich, den Abstand d über der Länge der Roststäbe 10-i konstant zu halten oder zu variieren.

Die Roststäbe 10-i sind bevorzugt gleich lang, zueinander jeweils in einem gleichen Abstand d angeordnet und weisen eine im Wesentlichen einheitliche Breite D auf. Der rechteckige Rost 10 weist eine Längsseite L1 und eine Breitseite L2 auf. Die Längsseite L1 ist die schräg im Vergaserbehälter angeordnete Seite. Die Breitseite ist die im Wesentlichen horizontal im Vergaserbehälter angeordnete Seite.

Der Rost ist also bevorzugt so in dem Vergaserbehälter 2 angeordnet, dass die Längsseite L1 des Rosts 10 horizontal verläuft und parallel zur vorderen Seitenwand 3-1 des Vergaserbehälters 2 angeordnet ist. Die Breitseite L2 des Rosts 10 verläuft parallel zur linken und rechten Seitenwand 4-1, 4-2 und schräg (gegenüber der Vertikalrichtung) zwischen der vorderen und der hinteren Seitenwand 3-1 und 3-2.

Fig. 4 zeigt den Rost 10 im Querschnitt entlang der zwischen zwei Roststäben 10-i verlaufenden Schnittebene A-A aus Fig. 2. Die Roststäbe 10-i umfassen in dem Beispiel mehrere obere Enden 8 und untere Enden 9. Von den oberen Enden 8 der Roststäbe 10-i erstrecken sich quer zu den Roststäben 10-i (senkrecht zur schiefen Ebene bzw. Oberfläche des Rosts) obere Lagerfortsätze 13. Die Rostantriebseinrichtung 11 umfasst eine Antriebs- und Kurbelwelle 19 mit Exzenterelementen 12, an der die Lagerfortsätze 13 der Roststäbe 10-i drehbar an den Exzenterelementen 12 gelagert sind. Die Roststäbe 10-i können jeweils einzeln, gruppenweise oder als vollständiger Satz mit der Antriebswelle 19 verbunden sein. Bevorzugt sind mindestens zwei Gruppen von Roststäben 10-i gebildet, die jeweils gleichartig mit der Antriebswelle 10 verbunden sind, wobei sich die Anbindung der Gruppen untereinander jedoch unterscheidet, insbesondere durch Bildung mindestens eines Versatzes.

Die Exzenterelemente 12 sitzen drehfest auf der Kurbelwelle 19 und sind entlang der Antriebs- und Kurbelwelle 19 bevorzugt zueinander versetzt angeordnet. Es können entsprechend der obigen Erläuterung zwei oder mehr Gruppen von Exzenterelementen vorgesehen sein, wobei innerhalb einer Gruppe eine übereinstimmende Anordnung vorliegt, zwischen den Gruppen aber eine unterschiedliche und insbesondere versetzte Anordnung. Der Versatz kann ein rotatorischer Versatz in Umfangsrichtung der Antriebswelle 19 und/oder ein Amplitudenversatz in Radialrichtung der Antriebswelle 19 sein.

An den unteren Enden 9 der Roststäbe 10-i befinden sich beliebige Lagerstellen, die eine Bewegung des Rosts 10 ermöglichen. Beispielsweise sind untere Lagerfortsätze 14 vorgesehen, die sich ebenfalls quer von den Roststäben 10-i (senkrecht zur Oberfläche / schiefen Ebene) wegerstrecken.

Der Rost 10 umfasst außerdem bevorzugt Lagerleisten 60 mit je einem vorderen Ende 61 und einem hinteren Ende 62. Die Lagerleisten können als zusätzliche Lagermittel des Rostes 10 dienen. Die Lagerleisten 60 sind gemäß einer bevorzugten Ausführung an den hinteren (vom Rost 10 wegweisenden) Enden 62 auf gleicher oder unterschiedlicher Höhe kippbeweglich an Schwenkpunkten montiert. An den vorderen Enden 61 der Lagerleisten 60 sind die unteren Lagerfortsätze 14 drehbar gelagert. Somit können sich die Verbindungspunkte zwischen den Lagerleisten 60 und den Roststäben 10-i und mithin die unteren Enden der Roststäbe 10-i im Wesentlichen auf einer Kreisbahn um die Schwenkpunkte bewegen. Je nach Ausbildung der Lagerfortsätze 14 kann sich neben der Kreisbewegung einer überlagerte translatorische Bewegung der unteren Kante 9 des Rostes 10 bzw. der Roststäbe 10-i ergeben. Die unteren Lagerfortsätze 14 und die Lagerleisten 60 bilden bevorzugt zusammen ein Gleit-Dreh-Lager. Das Gleit-Dreh-Lager gibt in Kombination mit der Rostantriebseinrichtung 11 die zyklische Vergrößerung und Verkleinerung des Spaltmaßes zwischen der unteren Kante 9 des Rostes 10 bzw. der Roststäbe 10-i und der vorderen Seitenwand 3-1 vor.

Die Schwenkpunkte können statisch oder bewegbar vorgesehen sein. Insbesondere können durch eine (gemeinsame, gruppenweise oder einzelne) Versetzung von Schwenkpunkten das Bewegungsmuster und/oder der Bewegungsumfang des Rosts 10 und/oder der Roststäbe 10-i vorgebbar oder einstellbar sein.

Beim Drehen der Antriebs- und Kurbelwelle 19 werden die Exzenterelemente 12 mit der Antriebs- und Kurbelwelle 19 mitgedreht, sodass die oberen Lagerfortsätze 13 eine Exzenterbewegung ausführen. Mit den Lagerfortsätzen 13 werden die Roststäbe 10-i (einzeln, gruppenweise oder insgesamt) quer und längs zur schiefen Ebene des Rosts 10 bewegt.

Durch die versetzte Anordnung der Exzenterelemente 12 werden die Roststäbe 10-i bevorzugt auch gegeneinander bewegt, sodass ein Zusetzen der Rostspalten mit Schlackeklumpen verhindert wird.

Die Exzenterelemente 12 können in einer Ebene angeordnet sein, die sich senkrecht zur Antriebswelle 19 erstreckt. In diesem Fall wird ausschließlich eine Bewegung der Roststäbe 10-i im Wesentlichen senkrecht zur Oberfläche des Rosts 10 bzw. senkrecht zur schiefen Ebene, jedoch nicht in Axialrichtung der Antriebswelle 19 erzeugt.

Alternativ können ein oder mehrere und insbesondere alle Exzenterelemente 12 in einer Ebene angeordnet sein, die schräg gegenüber der Antriebswelle 19 ausgerichtet ist. Hierdurch kann eine Bewegung der Roststäbe 10-i hervorgerufen werden, die auch einen (geringen) Bewegungsanteil in Axialrichtung der Antriebswelle 19 umfasst. Durch diesen Bewegungsanteil in Axialrichtung kann der Abstand d zwischen zwei (unterschiedlich angetriebenen) Roststäben 10-i zyklisch verkleinert und vergrößert werden, was das Abgleiten der Schlackeklumpen weiter unterstützt. Ferner kann auch ein Aufbrechen von Schlackeklumpen in dem Spalt zwischen zwei derart (unterschiedlich angetriebenen) Roststäben 10-i ermöglicht werden.

Durch die Rostantriebseinrichtung 11 mit der sich drehenden Antriebs- und Kurbelwelle 19 wird der Rost 10 auch quer zur Längserstreckung der Roststäbe 10-i bewegt. Es wird also ein Bewegungsanteil erzeugt, der zumindest teilweise auf die vordere Seitenwand hin orientiert ist. Der bewegte Rost 10 drückt so die einfallenden Schlackebrocken 51 wiederholt gegen die dem Rost 10 gegenüberliegende vordere Seitenwand 3-1, um die Brocken aufzubrechen und zu zerkleinern. Die zerkleinerten Schlackebrocken 51 treten dann durch die Rostspalten oder durch den Spalt zwischen der unteren Rostkante 7 und der vorderen Seitenwand 3-1 hindurch. Bevorzugt werden die zerkleinerten Schlackebrocken unterhalb des Rostes 10 durch die Schlackenaustragseinrichtung 28 abgeführt.

Die Antriebs- und Kurbelwelle 19 ist gemäß einer bevorzugten Variante hohl bzw. rohrförmig ausgeführt. Mit anderen Worten bildet die Antriebs- und Kurbelwelle 19 bevorzugt eine Passage für ein Kühlmittel. Die Antriebswelle wird von Kühlwasser durchströmt. Durch die Vergasung der Biomasseteilchen 50 herrschen im Bereich des Rostes 10 Temperaturen im Bereich von 800°C bis 1000°C. Durch die hohle bzw. rohrförmige Antriebs- und Kurbelwelle 19, die von Kühlwasser durströmt wird, wird eine Wasserkühlung 21 bereitgestellt. Alternativ kann eine beliebige andere Form einer Wasserkühlung vorgesehen sein. Beispielsweise können mindestens einer Seitenwand 3-1, 3-2, 4-1, 4-1 des Vergaserbehälters ein oder mehrere Kühlmittelpassagen vorgesehen sein. Wiederum alternativ oder zusätzlich können ein oder mehrere Roststäbe 10-i und/oder die Lagerfortsätze 13, 14 eine Kühlmittelpassage aufweisen, die von einem Kühlmittel durchströmt wird.

Wie Fig. 3A und Fig. 3B in zwei Varianten zeigen, hat der Vergaserbehälter 2 gemäß einer bevorzugten Ausführung zumindest im Bereich des schräg angeordneten, hier nur schematisch dargestellten Rosts 10 einen rechteckigen Querschnitt mit vorderer und hinterer und linker und rechter Seitenwand 3-1, 3-2, 4-1, 4-2. Die vordere Seitenwand 3-1 und die hintere Seitenwand 3-2 weisen einen ersten Wandabstand a zueinander auf. Die linke Seiteinwand 4-1 und die rechte Seitenwand 4-2 haben zueinander einen zweiten Wandabstand b.

Die Breitseite L2 des Rosts 10 bzw. der Abstand zwischen der linken und rechten Seitenwand 4-1, 4-2 kann vorgebbar oder einstellbar sein, um eine momentane Leistungsstufe des Festbettvergasers vorzugeben oder einzustellen bzw. einen Festbettvergaser mit einer bestimmten Leistungsklasse zu bilden. Mit anderen Worten kann durch Konstanthaltung des Abstands a zwischen der vorderen und hinteren Seitenwand 3-1, 3-2 bzw. Konstanthaltung der Größe der Längsseite L1 des Rosts 10 und andererseits Veränderung des Abstands b zwischen der linken und rechten Seitenwand 4-1, 4-2 des Vergaserbehälters bzw. Veränderung der Größe der Breitseite L2 des Rosts 10 die Leistung eingestellt werden.

In der in Fig. 3A gezeigten Variante ist der Vergaserquerschnitt quadratisch (a = b).

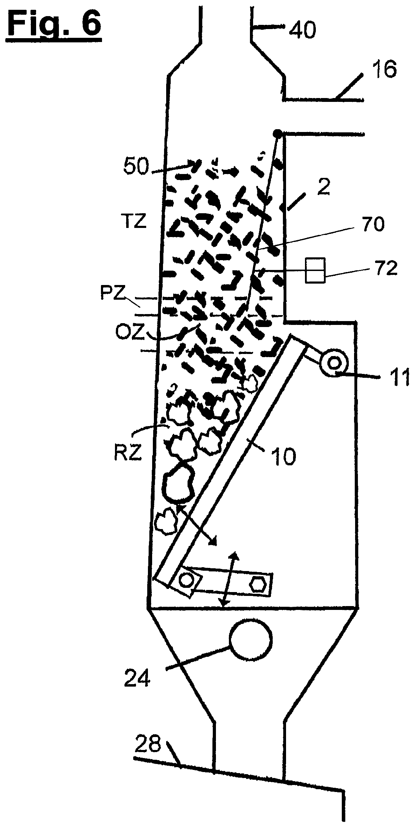

Fig. 3B zeigt eine weitere beispielhafte Ausführungsform eines Festbettvergasers mit größerer Leistung, die sich dadurch von der Ausführungsform nach Fig. 3A unterscheidet, dass der zweite Wandabstand b des Vergaserbehälters größer als der erste Wandabstand a ist. Wie aus Fig. 1 und 6 zu ersehen ist, legt der erste Wandabstand a zusammen mit dem Neigungswinkel a des Rostes 10 die relative Lage von Reduktions- und Oxidationszone OZ, RZ zum Rost 10 fest. Empirisch hat sich herausgestellt, dass sich bei einem ersten Wandabstand a von 100 bis 130mm und einem Neigungswinkel α des Rostes von 23° bis 28° optimale Verhältnisse ergeben. Will man daher die Leistung des Festbettvergasers vergrößern, lässt man den ersten Wandabstand a und den Neigungswinkel α unverändert und vergrößert lediglich den zweiten Wandabstand b.

Würde man den ersten Wandabstand a verändern, würde sich auch die Lage von Oxidations- und Reduktionszone bezüglich des Rostes verändern, was zumindest während des Betriebs des Festbettvergasers zu schwer kontrollierbaren Änderungen der Reaktionszonen führt. Vergrößert man hingegen nur den zweiten Wandabstand b so ergibt sich eine größere Leistung des Festbettvergasers ohne Veränderung der räumlichen Zuordnung von Oxidations- und Reduktionszone zum Rost 10.

In Fig. 6 ist eine zusätzliche Möglichkeit zur Verkleinerung des Querschnitts des rechteckigen Vergaserbauteils 2 über dem schrägen Rost 10 angegeben. An der hinteren Seitenwand 3-2 des Vergaserbehälters ist in dem dargestellten Beispiel eine Klappe 70 angeordnet, die im oberen Bereich der hinteren Seitenwand 3-2 angelenkt ist. Alternativ kann die Klappe an einer anderen Seitenwand des Vergaserbehälters 2 angeordnet sein.

Die Klappe 70 reicht bevorzugt bis in den Bereich der Pyrolysezone PZ und kann über eine Betätigungseinrichtung 72 mehr oder minder in den Vergaserbehälter 2 hineingekippt werden. Damit kann während des Betriebs des Festbettvergasers auf ein ungewolltes Verhalten der Biomasseteilchen reagiert werden. Es lässt sich damit ein Hochbrennen der Biomasseteilchen und damit ein Verschieben der einzelnen in Fig. 6 gezeigten Vergaserzonen verhindern.

### BEZUGSZEICHENLISTE

| | | |
|---|---|---|
| TZ | Trocknungszone | *Drying zone* |
| PZ | Pyrolysezone | *Pyrolysis zone* |
| OZ | Oxidationszone | *Oxidation zone* |
| RZ | Reduktionszone | *Reduction zone* |
| α | Neigungswinkel des Rosts zur Senkrechten | *Inclination angle of grate towards vertical* |
| a | erster Wandabstand des Vergaserbehälters | *First wall distance of gasifier container* |
| b | zweiter Wandabstand des Vergaserbehälters | *Second wall distance of gasifier container* |
| d | Abstand der Roststäbe | *Distance of grate rods* |
| D | Breite der Roststäbe | *Width of grate rods* |
| A-A | Schnittebene | *Section plane* |
| B-B | Schnittebene | *Section plane* |
| L1 | Längsseite des Rosts | *Longitudinal side of grate* |
| L2 | Breitseite des Rosts | *Broadside of grate* |
| 3 | Vergaserbehälter | *Gasifier container* |
| 3-1 | vordere Seitenwand des Vergaserbehälters | *Frontal side wall of gasifier container* |
| 3-2 | hintere Seitenwand des Vergaserbehälters | *Rear side wall of gasifier container* |
| 4-1 | linke Seitenwand des Vergaserbehälters | *Left side wall of gasifier container* |
| 4-2 | rechte Seitenwand des Vergaserbehälters | *Right side wall of gasifier container* |
| 6 | obere Kante von 10 | *Upper edge of 10* |
| 7 | untere Kante von 10 | *Lower edge of 10* |
| 8 | obere Enden der Roststäbe | *Upper end of grate rod* |
| 9 | untere Enden der Roststäbe | *Lower end of grate rod* |
| 10 | Rost | *Grate* |
| 10-i | Roststäbe | *Grate rods* |
| 11 | Rostantriebseinrichtung | *Grate driving device* |
| 12 | Exzenterelemente | *Eccentric elements* |
| 13 | obere Lagerfortsätze | *Upper bearing extension* |
| 14 | untere Lagerfortsätze | *Lower bearing extension* |
| 16 | Luftzuführung | *Air supply* |
| 19 | Antriebs- und Kurbelwelle | *Drive and cam shaft* |
| 21 | Wasserkühlung | *Water cooling* |
| 24 | Produktgasabzug | *Product gas flue* |
| 26 | rohrförmige Schlackenaufnahme | *Tubular slag reception* |
| 28 | Schlackenaustragseinrichtung | *Slag discharge device* |
| 30 | Gabelelement | *Fork element* |
| 31 | Zinken | *Prongs* |
| 40 | Zuführung für Biomasseteilchen | *Input of Biomass particles* |
| 50 | Biomasseteilchenschüttung | *Biomass particle bulk (fill)* |
| 51 | Schlackeklumpen | *Slag lump* / *lag nugget* |
| 60 | Lagerleisten | *Bearing bar* |
| 61 | Vordere Enden der Lagerleisten | *Frontal end of bearing bar* |
| 62 | Hintere Enden der Lagerleisten | *Rear end of bearing bar* |
| 70 | Klappe an hinterer Seitenwand 3-2 | *Flap at rear side wall* |
| 72 | Betätigungsvorrichtung von 70 | *Control* / *operation device for 70* |

## Patentansprüche

1. Festbettvergaser zum Erzeugen eines Produktgases aus schüttbaren Biomasseteilchen (50) mit
- einem Vergaserbehälter (2),
- einer Zuführung (40) für Biomasseteilchen im oberen Bereich des Vergaserbehälters (2),
- einem Rost (10) zur Abstützung der Biomasseteilchen (50) in dem Vergaserbehälter (2), wobei der Rost über eine Rostantriebseinrichtung (11) bewegbar ist,
- einer Luftzuführung (16) zur Zuführung von Verbrennungsluft in den Vergaserbehälter (2),
- einem aus dem Bereich unter dem Rost (10) aus dem Vergaserbehälter (2) herausführenden Produktgasabzug (24),
**dadurch gekennzeichnet, dass**
- der Rost (10) im Wesentlichen plan ist, schräg in dem Vergaserbehälter (2) angeordnet ist, eine schiefe Ebene aufspannt und den Vergaserbehälter (2) in einen Bereich über dem Rost und einen Bereich unter dem Rost unterteilt, und dass
- der Rost (10) mittels der Rostantriebseinrichtung (11) in einer Richtung quer zur schiefen Ebene hin und her bewegbar ist.

2. Festbettvergaser nach Anspruch 1, wobei
- der Rost (10) rechteckig ist und eine Längsseite (L1) und eine Breitseite (L2) aufweist, und wobei
- der Vergaserbehälter (2) zumindest im Bereich des schräg angeordneten Rostes (10) in horizontaler Richtung einen rechteckigen Querschnitt, eine vordere, eine hintere, eine linke und eine rechte Seitenwand (3-1, 3-2, 4-1, 4-2) aufweist.

3. Festbettvergaser nach einem der vorhergehenden Ansprüche, wobei der Rost (10) dazu ausgebildet ist, einfallende Schlackebrocken (51) wiederholt gegen eine dem Rost (10) gegenüberliegende vordere Seitenwand (3-1) des Vergaserbehälters (2) zu drücken, um die Schlackebrocken (51) aufzubrechen oder zu zerkleinern.

4. Festbettvergaser nach einem der vorhergehenden Ansprüche, wobei eine vordere und eine hintere Seitenwand (3-1, 3-2) des Vergaserbehälters (2) einen ersten Wandabstand (a) und eine linke und rechte Seitenwand (4-1, 4-2) des Vergaserbehälters (2) einen zweiten Wandabstand (b) aufweisen, und wobei die Längsseite (L1) des Rostes (10) horizontal verläuft und parallel zur vorderen Seitenwand (3-1) des Vergaserbehälters (2) angeordnet ist.

5. Festbettvergaser nach einem der vorhergehenden Ansprüche, **dadurch gekennzeichnet, dass** die Neigung (α) des Rostes (10) zur Senkrechten zwischen 23° und 28° beträgt.

6. Festbettvergaser nach Anspruch 4 , **dadurch gekennzeichnet, dass** eine Leistungsstufe des Festbettvergasers durch den zweiten Wandabstand (b) einstellbar ist, während der erste Wandabstand (a) konstant ist.

7. Festbettvergaser nach Anspruch einem der vorhergehenden Ansprüche, wobei der Rost (10) eine Mehrzahl von Roststäben (10-i) umfasst, wobei die Roststäbe (10-i):
- ein oberes (8) und ein unteres Ende (9) aufweisen, und wobei die Roststäbe (10-i) schräg in dem Vergaserbehälter (2) angeordnet sind; und/oder
- mit einem Abstand (d) zueinander in dem Vergaserbehälter (2) angeordnet sind; und/oder
- mittels einer Antriebseinrichtung, insbesondere mit der Rostantriebseinrichtung (11) gegeneinander bewegbar sind.

8. Festbettvergaser nach Anspruch 7, wobei die Roststäbe (10-i) auf der nach oben weisenden Seite abgeflacht sind.

9. Festbettvergaser nach einem der vorhergehenden Ansprüche, wobei die Rostantriebseinrichtung (11) eine Antriebs- und Kurbelwelle (19) mit Exzenterelementen (12) umfasst.

10. Festbettvergaser nach Anspruch 9, wobei die Exzenterelemente (12) versetzt angeordnet sind.

11. Festbettvergaser nach Anspruch 9, wobei die Rostantriebseinrichtung (11) derart ausgebildet ist, dass die maximale Lagedifferenz zwischen zwei benachbarten Roststäben (10-i) geringer ist als die Dicke eines Roststabs.

12. Festbettvergaser nach Anspruch 7, wobei die Roststäbe (10-i) gegeneinander bewegbar sind.

13. Verfahren zum Betrieb eines Festbettvergasers und zur Bereitstellung eines Produktgases aus schüttbaren Biomasseteilchen (50), umfassend die folgenden Schritte:
- Vorsehen eines Festbettvergasers (1) mit
∘ einem Vergaserbehälter (2),
∘ einer Zuführung (40) für Biomasseteilchen im oberen Bereich des Vergaserbehälters (2),
∘ einem Rost (10) zur Abstützung der Biomasseteilchen (50) in dem Vergaserbehälter (2), wobei der Rost den Vergaserbehälter (2) in einen Bereich über dem Rost und einen Bereich unter dem Rost unterteilt,
∘ einer Luftzuführung (16) zur Zuführung von Verbrennungsluft in den Vergaserbehälter (2),
∘ einem aus dem Bereich unter dem Rost (10) aus dem Vergaserbehälter (2) herausführenden Produktgasabzug (24),
- Einbringen einer Biomasseteilchenschüttung (50) über dem Rost (10);
- Zuführen von Verbrennungsluft in den Vergaser;
- Abführen des Produktgases über den Produktgasabzug (24);
**dadurch gekennzeichnet, dass**
- Der Rost (10) im Wesentlichen plan ist, schräg in dem Vergaserbehälter (2) angeordnet ist und eine schiefe Ebene aufspannt, und dass
- Der Rost (10) über eine Rostantriebseinrichtung (11) in einer Richtung quer zur schiefen Ebene hin und her bewegt wird.

14. Verfahren nach Anspruch 13 , wobei der Rost intervallartig bewegt wird, wobei sich an eine Bewegungsphase des Rostes jeweils eine Pausephase anschließt.

15. Verfahren nach einem der vorhergehenden Ansprüche 13 bis 14, wobei der Zeitanteil der Bewegungsphasen des Rostes weniger als 35% der Betriebsdauer ausmacht, insbesondere weniger als 10% der Betriebsdauer.

## Claims

1. Fixed-bed gasifier for producing a product gas from loose biomass particles (50) with
- a gasifier vessel (2),
- a feed (40) for biomass particles in the upper region of the gasifier vessel (2),
- a grille (10) for supporting the biomass particles (50) in the gasifier vessel (2), the grille being movable via a grille drive device (11),
- an air feed (16) for feeding combustion air into the gasifier vessel (2),
- a product gas extractor (24) which leads out of the gasifier vessel (2) out of the region below the grille (10),
**characterized in that**
- the grille (10) is substantially planar, is arranged obliquely in the gasifier vessel (2), defines a tilted plane, and divides the gasifier vessel (2) into a region above the grille and a region below the grille, and **in that**
- the grille (10) can be moved by means of the grille drive device (11) to and fro in a direction transversely with respect to the tilted plane.

2. Fixed-bed gasifier according to Claim 1,
- the grille (10) being rectangular and having a length side (L1) and a width side (L2), and
- the gasifier vessel (2) having, at least in the region of the obliquely arranged grille (10), a rectangular cross section, a front, a rear, a left-hand and a right-hand side wall (3-1, 3-2, 4-1, 4-2), in the horizontal direction.

3. Fixed-bed gasifier according to either of the preceding claims, the grille (10) being configured to repeatedly press collapsing slag chunks (51) against a front side wall (3-1), lying opposite the grille (10), of the gasifier vessel (2), in order to break up or to comminute the slag chunks (51).

4. Fixed-bed gasifier according to one of the preceding claims, a front and a rear side wall (3-1, 3-2) of the gasifier vessel (2) being at a first wall spacing (a), and a left-hand and right-hand side wall (4-1, 4-2) of the gasifier vessel (2) being at a second wall spacing (b), and the longitudinal side (L1) of the grille (10) running horizontally and being arranged parallel to the front side wall (3-1) of the gasifier vessel (2).

5. Fixed-bed gasifier according to one of the preceding claims, **characterized in that** the inclination (α) of the grille (10) with respect to the perpendicular is between 23° and 28°.

6. Fixed-bed gasifier according to Claim 4, **characterized in that** a performance level of the fixed-bed gasifier is adjustable by way of the second wall spacing (b), whereas the first wall spacing (a) is constant.

7. Fixed-bed gasifier according to one of the preceding claims, the grille (10) comprising a plurality of grille bars (10-i), the grille bars (10-i):
- comprising an upper end (8) and a lower end (9), and the grille bars (10-i) being arranged obliquely in the gasifier vessel (2); and/or
- being arranged at a spacing (d) from one another in the gasifier vessel (2); and/or
- being movable with respect to one another by means of a drive device, in particular by way of the grille drive device (11).

8. Fixed-bed gasifier according to Claim 7, the grille bars (10-i) being flattened on the upwardly pointing side.

9. Fixed-bed gasifier according to one of the preceding claims, the grille drive device (11) comprising a drive and crankshaft (19) with eccentric elements (12).

10. Fixed-bed gasifier according to Claim 9, the eccentric elements (12) being arranged in an offset manner.

11. Fixed-bed gasifier according to Claim 9, the grille drive device (11) being configured in such a way that the maximum position difference between two adjacent grille bars (10-i) is smaller than the thickness of a grille bar.

12. Fixed-bed gasifier according to Claim 7, the grille bars (10-i) being movable with respect to one another.

13. Method for operating a fixed-bed gasifier and for providing a product gas from loose biomass particles (50), comprising the following steps:
- providing a fixed-bed gasifier (1) with
o a gasifier vessel (2),
o a feed (40) for biomass particles in the upper region of the gasifier vessel (2),
o a grille (10) for supporting the biomass particles (50) in the gasifier vessel (2), the grille dividing the gasifier vessel (2) into a region above the grille and a region below the grille,
o an air feed (16) for feeding combustion air into the gasifier vessel (2),
o a product gas extractor (24) which leads out of the gasifier vessel (2) out of the region below the grille (10),
- introducing of a biomass particle bulk material (50) above the grille (10);
- feeding of combustion air into the gasifier;
- discharging of the product gas via the product gas extractor (24);
**characterized in that**
- the grille (10) is substantially planar, is arranged obliquely in the gasifier vessel (2), and defines a tilted plane, and **in that**
- the grille (10) is moved via a grille drive device (11) to and fro in a direction transversely with respect to the tilted plane.

14. Method according to Claim 13, the grille being moved at intervals, a movement phase of the grille being followed in each case by a rest phase.

15. Method according to one of the preceding Claims 13 and 14, the proportion of time of the movement phases of the grille being less than 35% of the operating duration, in particular less than 10% of the operating duration.

## Revendications

1. Gazéificateur à lit fixe pour la production d'un gaz produit à partir de particules de biomasse (50) pouvant être déversées, comprenant
- un contenant de gazéificateur (2),
- une alimentation (40) en particules de biomasse dans la zone supérieure du contenant de gazéificateur (2),
- une grille (10) pour le support des particules de biomasse (50) dans le contenant de gazéificateur (2), la grille pouvant être déplacée par l'intermédiaire d'un dispositif d'entraînement de grille (11),
- une alimentation en air (16) pour l'alimentation en air de combustion dans le contenant de gazéificateur (2),
- une évacuation de gaz produit (24) sortant du contenant de gazéificateur (2) à partir de la zone en dessous de la grille (10),
**caractérisé en ce que**
- la grille (10) est essentiellement plane, est agencée obliquement dans le contenant de gazéificateur (2), définit un plan en biais et divise le contenant de gazéificateur (2) en une zone au-dessus de la grille et une zone en dessous de la grille, et **en ce que**
- la grille (10) peut être déplacée en va-et-vient au moyen du dispositif d'entraînement de grille (11) dans une direction transversale au plan en biais.

2. Gazéificateur à lit fixe selon la revendication 1, dans lequel
- la grille (10) est rectangulaire et présente un côté de longueur (L1) et un côté de largeur (L2), et dans lequel
- le contenant de gazéificateur (2) présente, au moins dans la zone de la grille (10) agencée obliquement, dans la direction horizontale, une section transversale rectangulaire, une paroi latérale avant, une paroi latérale arrière, une paroi latérale gauche et une paroi latérale droite (3-1, 3-2, 4-1, 4-2).

3. Gazéificateur à lit fixe selon l'une quelconque des revendications précédentes, dans lequel la grille (10) est configurée pour presser de manière répétée des morceaux de scories incidents (51) contre une paroi latérale avant (3-1) du contenant de gazéificateur (2) opposée à la grille (10), afin de briser ou de broyer les morceaux de scories (51).

4. Gazéificateur à lit fixe selon l'une quelconque des revendications précédentes, dans lequel une paroi latérale avant et une paroi latérale arrière (3-1, 3-2) du contenant de gazéificateur (2) présentent une première distance de parois (a) et une paroi latérale gauche et une paroi latérale droite (4-1, 4-2) du contenant de gazéificateur (2) présentent une deuxième distance de parois (b), et dans lequel le côté de longueur (L1) de la grille (10) s'étend horizontalement et est agencé parallèlement à la paroi latérale avant (3-1) du contenant de gazéificateur (2).

5. Gazéificateur à lit fixe selon l'une quelconque des revendications précédentes, **caractérisé en ce que** l'inclinaison (α) de la grille (10) par rapport à la verticale est comprise entre 23° et 28°.

6. Gazéificateur à lit fixe selon la revendication 4, **caractérisé en ce qu'**un niveau de puissance du gazéificateur à lit fixe peut être ajusté par la deuxième distance de parois (b), tandis que la première distance de parois (a) est constante.

7. Gazéificateur à lit fixe selon l'une quelconque des revendications précédentes, dans lequel la grille (10) comprend une pluralité de barreaux de grille (10-i), les barreaux de grille (10-i) présentant :
- une extrémité supérieure (8) et une extrémité inférieure (9), et les barreaux de grille (10-i) étant agencés obliquement dans le contenant de gazéificateur (2) ; et/ou
- étant agencés à une distance (d) les uns des autres dans le contenant de gazéificateur (2) ; et/ou
- pouvant être déplacés les uns par rapport aux autres au moyen d'un dispositif d'entraînement, en particulier avec le dispositif d'entraînement de grille (11) .

8. Gazéificateur à lit fixe selon la revendication 7, dans lequel les barreaux de grille (10-i) sont aplatis sur le côté dirigé vers le haut.

9. Gazéificateur à lit fixe selon l'une quelconque des revendications précédentes, dans lequel le dispositif d'entraînement de grille (11) comprend un arbre d'entraînement et un vilebrequin (19) avec des éléments excentriques (12).

10. Gazéificateur à lit fixe selon la revendication 9, dans lequel les éléments excentriques (12) sont agencés de manière décalée.

11. Gazéificateur à lit fixe selon la revendication 9, dans lequel le dispositif d'entraînement de grille (11) est configuré de telle sorte que la différence de position maximale entre deux barreaux de grille (10-i) voisins est inférieure à l'épaisseur d'un barreau de grille.

12. Gazéificateur à lit fixe selon la revendication 7, dans lequel les barreaux de grille (10-i) peuvent être déplacés les uns par rapport aux autres.

13. Procédé d'exploitation d'un gazéificateur à lit fixe et de fourniture d'un gaz produit à partir de particules de biomasse (50) pouvant être déversées, comprenant les étapes suivantes :
- la prévision d'un gazéificateur à lit fixe (1) comprenant
° un contenant de gazéificateur (2),
° une alimentation (40) en particules de biomasse dans la zone supérieure du contenant de gazéificateur (2),
° une grille (10) pour le support des particules de biomasse (50) dans le contenant de gazéificateur (2), la grille divisant le contenant de gazéificateur (2) en une zone au-dessus de la grille et une zone en dessous de la grille,
° une alimentation en air (16) pour l'alimentation en air de combustion dans le contenant de gazéificateur (2),
° une évacuation de gaz produit (24) sortant du contenant de gazéificateur (2) à partir de la zone en dessous de la grille (10),
- l'introduction d'une charge de particules de biomasse (50) au-dessus de la grille (10) ;
- l'alimentation en air de combustion dans le gazéificateur ;
- le déchargement du gaz produit par l'intermédiaire de l'évacuation de gaz produit (24) ;
**caractérisé en ce que**
- la grille (10) est essentiellement plane, est agencée obliquement dans le contenant de gazéificateur (2) et définit un plan en biais, et **en ce que**
- la grille (10) est déplacée en va-et-vient par l'intermédiaire d'un dispositif d'entraînement de grille (11) dans une direction transversale au plan en biais.

14. Procédé selon la revendication 13, dans lequel la grille est déplacée par intervalles, une phase de pause succédant à chaque phase de déplacement de la grille.

15. Procédé selon l'une quelconque des revendications 13 à 14 précédentes, dans lequel la proportion de temps des phases de déplacement de la grille représente moins de 35 % de la durée d'exploitation, en particulier moins de 10 % de la durée d'exploitation.
